# EUROPEAN PATENT APPLICATION

(11) **EP 4 844 870 A1**
(43) Date of publication of application: **25.11.2026**
(21) Application number: 24918987.9
(22) Date of filing: 18.12.2024
(51) Int. Cl.: H01M 10/0567, H01M 10/42, H01M 10/052

(54) **ELECTROLYTE ADDITIVE, BATTERY ELECTROLYTE COMPRISING SAME, AND SECONDARY BATTERY COMPRISING SAME**

(30) Priority: 18.01.2024 KR 20240008032; 23.10.2024 KR 20240145726
(71) Applicant: Soulbrain Co., Ltd., Seongnam-si, Gyeonggi-do 13486 (KR); Sp Samhwa Co., Ltd., Ansan-si, Gyeonggi-do 15619 (KR)
(72) Inventor: KIM, Bang Han, Seongnam-si, Gyeonggi-do 13486 (KR); KANG, Wan Chul, Seongnam-si, Gyeonggi-do 13486 (KR); KIM, Min Goo, Seongnam-si, Gyeonggi-do 13486 (KR); JEONG, Yuri, Ansan-si, Gyeonggi-do 15619 (KR); KIM, Changyul, Ansan-si, Gyeonggi-do 15619 (KR); KO, Sunghyun, Ansan-si, Gyeonggi-do 15619 (KR)
(74) Representative: Dehns
(86) International application number: PCT/KR2024/020600
(87) International publication number: WO 2025/154963

(57) **Abstract**

The present invention relates to electrolyte solution additives and an electrolyte solution and secondary battery including the electrolyte solution additives. According to the present invention, the present invention has an effect of providing a secondary battery having excellent long-term lifespan and high-temperature capacity retention by forming a stable film on the cathode and anode of a lithium secondary battery to suppress side reactions inside the battery, whereby charging efficiency and output are improved due to low charge and discharge resistance, an increase in resistance of the battery is suppressed even when stored for a long time under high-temperature conditions, and gas generation due to decomposition of electrolyte solution components is remarkably suppressed.

## Description

### [Technical Field]

The present invention relates to electrolyte solution additives, an electrolyte solution for batteries including the electrolyte solution additives, and a secondary battery including the electrolyte solution. More particularly, the present invention relates to electrolyte solution additives capable of providing a secondary battery having excellent long-term lifespan and high-temperature capacity retention by forming a stable film on the cathode and anode of a lithium secondary battery to suppress side reactions inside the battery, whereby charging efficiency and output may be improved due to low charge and discharge resistance, and an increase in resistance and gas generation of the battery may be suppressed even when stored for a long time under high-temperature conditions.

### [Background Art]

In a lithium secondary battery, an electrolyte between a cathode and an anode enables smooth movement of lithium ions, and use of electric energy is promoted according to a method in which electricity is generated or consumed by oxidation-reduction reaction according to intercalation and desorption at the cathode and anode.

Recently, as interest in the environment increases worldwide, environmental regulations are being strengthened. Accordingly, interest in eco-friendly automobiles that can replace internal combustion engine automobiles, which are one of the main causes of air pollution, is also increasing. Accordingly, domestic and foreign battery industries are actively developing automobile batteries.

To use a battery in an automobile, the output and capacity of the battery must be greatly increased, and problems such as a decrease in output and an increase in resistance at high and low temperatures must be solved in consideration of use environments such as severe weather. In particular, in the case of electric vehicles, research is being conducted to reduce the internal resistance of a battery and increase the remaining capacity in relation to the importance of output and driving distance performance. In particular, it is necessary to develop a battery that suppresses side reactions internal a battery and secures low resistance and long lifespan performance even when stored for a long time under high-temperature conditions.

### [Related Art Documents]

### [Patent Documents]

KR 2019-0014711 A

### [Disclosure]

### [Technical Problem]

Therefore, the present invention has been made in view of the above problems, and it is one object of the present invention to provide novel electrolyte solution additives for batteries, an electrolyte solution for batteries including the electrolyte solution additives, and a secondary battery including the electrolyte solution.

It is another object of the present invention to provide a secondary battery having improved battery output by suppressing side reactions inside a battery and reducing charge resistance, being capable of long-term storage due to improved recovery capacity at high temperatures, and having excellent lifespan maintenance at high temperatures.

The above and other objects can be accomplished by the present invention described below.

### [Technical Solution]

In accordance with one aspect of the present invention, provided is electrolyte solution additives including a compound in which one S-X bond and two S=O bonds are directly connected to a sulfur (S) element; and one or more compounds selected from the group consisting of 1-propene-1,3-sultone and ethylene sulfate, wherein X is a halogen element.

The compound in which one S-X bond and two S=O bonds are directly connected to a sulfur (S) element may have an asymmetric structure having a terminal -O-R3 (wherein R3 is an alkyl group having 1 to 3 carbon atoms).

The compound in which one S-X bond and two S=O bonds are directly connected to a sulfur (S) element may be a compound represented by Chemical Formula 1 below in which one S-X bond and two S=O bonds are directly connected to a sulfur (S) element.

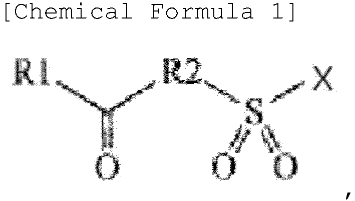

wherein a line represents a bond; when a separate element is not indicated, a point where bonds meet is carbon; a number of hydrogens satisfying a valence of the carbon is omitted; R1 is -O-R3; R2 is an alkylene having 1 to 3 carbon atoms; R3 is an alkyl having 1 to 3 carbon atoms; and X is F, Cl, I, or Br.

The compound in which one S-X bond and two S=O bonds are directly connected to a sulfur (S) element may be a compound represented by Chemical Formula 1-1 below. 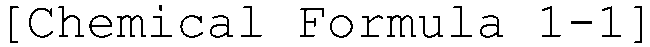 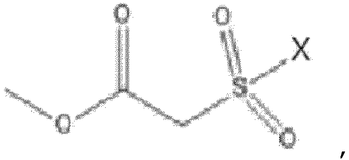 wherein a line represents a bond; when a separate element is not indicated, a point where bonds meet is carbon; a number of hydrogens satisfying a valence of the carbon is omitted; and X is F, Cl, I, or Br.

The compound represented by Chemical Formula 1a may be a compound represented by Chemical Formula 1a below.

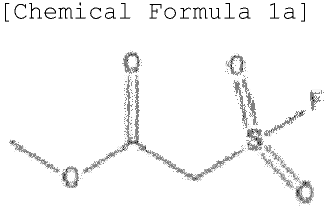

The compound in which one S-X bond and two S=O bonds are directly connected to a sulfur (S) element; and the one or more compounds selected from the group consisting of 1-propene-1,3-sultone and ethylene sulfate may be used in a weight ratio of 1:0.5 to 1:3.

For example, based on 100 % by weight of components constituting the electrolyte solution additives, the compound in which one S-X bond and two S=O bonds are directly connected to a sulfur (S) element may be included in an amount of 10 % by weight or less, as a specific example, 0.2 to 5 % by weight, as a preferred example, 0.2 to 1.0 % by weight.

For example, based on 100 % by weight of components constituting the electrolyte solution additives, the one or more compounds selected from the group consisting of 1-propene-1,3-sultone and ethylene sulfate may be included in an amount of 10 % by weight or less, as a specific example, 0.2 to 5 % by weight, as a preferred example, 0.2 to 1.8 % by weight.

In accordance with still another aspect of the present invention, provided is an electrolyte solution including an organic solvent, lithium salt, and electrolyte solution additives, wherein the electrolyte solution additives include the electrolyte solution additives described above.

The organic solvent may include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

The lithium salt may include one or more selected from the group consisting of LiPF₆, LiF₄, LiCl, LiBr, LiI, LiClO₄, LiBF4, LiB₁₀Cl₁₀, LiSbF6, LiAsF₆, LiN(SO₂F)₂, LiN(SO₂CF₃)₂, LiN(SO₂C₂F₅)₂, LiCF₃SO₃, LiCF₃CO₂, Li(CF₃SO₂)₂N, LiN(SO₃C₂F₅)₂, Li(FSO₂)₂N, LiC₄F₉SO₃, LiClO₄, LiAlO₂, LiAlCl₄, LiN(CₓF₂ₓ+1SO₂)(C_{y}F_{2y}+1SO₂) (Here, x and y are natural numbers, e.g., integers from 1 to 20), LiAsF₆, LiSbF₆, LiAlCl₄, LiB(C₂O₄)₂ (lithium bis(oxalato) borate: LiBOB), CH₃SO₃Li, and CF₃SO₃Li.

Based on 100 % by weight in total of the electrolyte solution, the electrolyte solution additives may be included in an amount of 10 % by weight or less.

In accordance with yet another aspect of the present invention, provided is a secondary battery including an anode, a cathode, a separation membrane interposed between the anode and the cathode, and an electrolyte solution, wherein the electrolyte solution is the electrolyte solution described above.

The secondary battery may be a battery for automobiles.

The battery for automobiles may be a high-nickel NCA, NCM, mid-nickel NCM, lithium iron phosphate (LFP, LMFP), lithium-manganese-rich (LMR, LMX, OLO, HLM), or lithium-rich (DRX) full cell battery.

### [Advantageous Effects]

A secondary battery including the electrolyte solution including the electrolyte solution additives according to the present invention has excellent long-term lifespan and high-temperature capacity retention, as side reactions inside the battery can be suppressed, charging efficiency and output can be improved due to low charge resistance, and an increase in resistance of the battery can be suppressed even when stored for a long time under high-temperature conditions.

### [Best Mode]

Hereinafter, the present invention will be described in detail, but the present invention is not limited thereto.

To manufacture an automobile battery, the present inventors have studied a secondary battery having improved output by suppressing side reactions inside a battery and excellent recovery capacity and lifespan characteristics at high temperatures by suppressing the increase in battery resistance even when stored for a long time under high temperature conditions. While conducting the above research, the present inventors confirmed that all of the above objects were achieved when an additive having a specific structure was added to an electrolyte of a secondary battery. Based on these results, the present inventors conducted further studies to complete the present invention.

Electrolyte solution additives included in an electrolyte solution according to embodiments of the present invention include a compound in which one S-X bond and two S=O bonds are directly connected to a sulfur (S) element; and one or more compounds selected from the group consisting of 1-propene-1,3-sultone and ethylene sulfate, wherein X is a halogen element. In this case, side reactions inside a battery may be suppressed, charging efficiency and output may be improved due to low charge resistance of a secondary battery, and an increase in resistance of the battery may be suppressed even when stored for a long time under high-temperature conditions, whereby long-term lifespan and high-temperature capacity retention may be excellent.

For example, as a result of DFT (density functional theory) calculation for the compound, the compound is measured to have a HOMO of -10.18 eV and a LUMO of 1.42 eV compared to ethylene carbonate (EC) having a HOMO of -10.92 eV and a LUMO of 1.41 eV, so that the reduction reactivity is almost similar, but judging from the HOMO value which is 0.74 eV higher, the compound is predicted to be capable of acting on the cathode as well in terms of oxidation reactivity, and actually, as a sulfonyl-based film is formed after the middle of the reaction along with an initial LiF-based inorganic film component, the interface between the electrode and the electrolyte solution is stabilized. Specifically, by effectively generating Li₂SO₃ known as a low-resistance component, effects of stabilizing the electrode and reducing resistance may be obtained.

The compound in which one S-X bond and two S=O bonds are directly connected to a sulfur (S) element may have an asymmetric structure having a terminal -O-R3 (wherein R3 is an alkyl group having 1 to 3 carbon atoms). In this case, side reactions inside a battery may be suppressed, charging efficiency and output may be improved due to low charge resistance of a secondary battery, and long-term lifespan and high-temperature capacity retention may be excellent.

In the present disclosure, the compound in which one S-X bond and two S=O bonds are directly connected to a sulfur (S) element may include one or more selected from the following compounds in which one S-X bond and two S=O bonds are directly connected to a sulfur (S) element. In this case, side reactions inside a battery may be suppressed, charging efficiency and output may be improved due to low charge resistance of a secondary battery, and long-term lifespan and high-temperature capacity retention may be excellent.

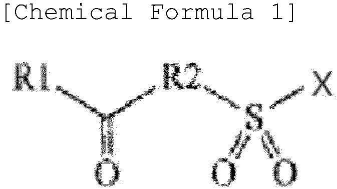

(In Chemical Formula 1, a line represents a bond; when a separate element is not indicated, a point where bonds meet is carbon; a number of hydrogens satisfying a valence of the carbon is omitted; R1 is -O-R3; R2 is an alkylene having 1 to 3 carbon atoms; R3 is an alkyl having 1 to 3 carbon atoms; and X is F, Cl, I, or Br.)

As for X, it is preferable to use F or Cl having a large electronegativity difference from sulfur (S) to provide the above-described effects.

When the above-described electrolyte solution additives are added to the electrolyte solution of a battery, electrons are localized toward the O element or F element due to an electronegativity difference between an O element directly connected to a sulfur (S) element and an X element (e.g., O element or F element), and furthermore, due to the asymmetric structure of the entire corresponding Chemical Formula, the S element becomes an electron-poor (e- poor, δ+) state, whereby an oxidation reaction is induced in the electrolyte solution including lithium ions, forming a stable film on an electrode, as a specific example, a cathode.

Due to the stability of the film, decomposition of the electrolyte solution may be prevented, whereby cycle characteristics may be improved, and in particular, since the film is not decomposed at a high temperature, high-temperature storage properties may be significantly improved, compared to a deterioration in high-temperature storage properties caused by decomposition of a conventional electrode film at a high temperature. In addition, an increase in resistance is prevented, thereby having an effect of improving charge and discharge efficiency and output, and since gas generation due to a chemical reaction inside the battery is also suppressed, safety of the battery may be improved. In addition, by preventing a structural collapse of the electrode active material of the cathode and anode at a high temperature, capacity retention is improved, thereby having an effect of extending a lifespan.

The compound in which one S-X bond and two S=O bonds are directly connected to a sulfur (S) element may be a compound represented by Chemical Formula 1-1 below.

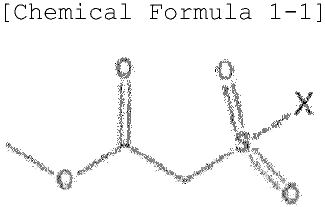

(In Chemical Formula 1-1, a line represents a bond; when a separate element is not indicated, a point where bonds meet is carbon; a number of hydrogens satisfying a valence of the carbon is omitted; and X is F, Cl, I, or Br.)

The compound represented by Chemical Formula 1a may be a compound represented by Chemical Formula 1a below.

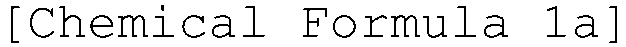

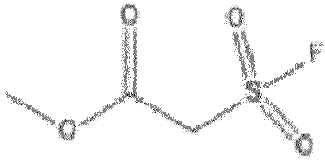

In the present disclosure, when the one or more compounds selected from the group consisting of 1-propene-1,3-sultone and ethylene sulfate are used, side reactions inside a battery may be suppressed, charging efficiency and output may be improved due to low charge resistance of a secondary battery, and long-term lifespan and high-temperature capacity retention may be excellent.

Based on 100 % by weight in total of the electrolyte solution, the compound in which one S-X bond and two S=O bonds are directly connected to a sulfur (S) element may be included in an amount of 10 % by weight or less, preferably 0.1 to 5 % by weight, more preferably 0.2 to 1.0 % by weight. Within this range, the charging efficiency and high-temperature lifespan of a battery may be excellent.

It is preferable to add the compound in which one S-X bond and two S=O bonds are directly connected to a sulfur (S) element in combination with one or more compounds selected from the group consisting of 1-propene-1,3-sultone and ethylene sulfate. In this case, a predetermined synergistic effect may be provided without adversely affecting the components constituting a battery.

Based on 100 % by weight in total of the electrolyte solution, the one or more compounds selected from the group consisting of 1-propene-1,3-sultone and ethylene sulfate may be included in a total amount of 10 % by weight or less, preferably 0.2 to 5 % by weight, more preferably 0.2 to 1.8 % by weight. When the content of the compound satisfies the range, high-temperature characteristics and cycle characteristics of a battery may be improved.

Based on 100 % by weight in total of the electrolyte solution, the 1-propene-1,3-sultone may be included in an amount of 0.2 to 5 % by weight, preferably 0.2 to 2.5 % by weight, more preferably 0.2 to 0.9 % by weight. When the content of the compound satisfies the range, the high-temperature characteristics and cycle characteristics of a battery may be improved.

Based on 100 % by weight in total of the electrolyte solution, the ethylene sulfate may be included in an amount of 0.2 to 5 % by weight, preferably 0.2 to 2.5 % by weight, more preferably 0.2 to 0.9 % by weight. When the content of the compound satisfies the range, the high-temperature characteristics and cycle characteristics of a battery may be improved.

The compound in which one S-X bond and two S=O bonds are directly connected to a sulfur (S) element; and the one or more compounds selected from the group consisting of 1-propene-1,3-sultone and ethylene sulfate may be used in a weight ratio of 1:0.1 to 1:3, 1:0.7 to 2, or 1:0.7 to 1:1.7. In this case, side reactions inside a battery may be suppressed, charging efficiency and output may be improved due to low charge resistance of a secondary battery, and long-term lifespan and high-temperature capacity retention may be excellent.

The above-described additive components are to be included in addition to the above-described compound in which one S-X bond and two S=O bonds are directly connected to a sulfur (S) element. When only the other additive components are injected alone without the compound in which one S-X bond and two S=O bonds are directly connected to a sulfur (S) element, it was confirmed through Comparative Examples to be described later that the improvement effect on long-term lifespan and low resistance was poor.

For example, the electrolyte solution of the present invention may further include additives that may be generally used in an electrolyte solution for the purpose of suppressing side reactions inside a battery, improving lifespan characteristics of the battery, suppressing a decrease in battery capacity, improving discharge capacity of the battery, and the like, in addition to the electrolyte solution additives.

As a specific example, the additive components may include one or more selected from the group consisting of ethyl propionate (EP), propyl propionate (PP), succinic anhydride, tetravinyl silane, 1,1,2,2-tetrafluoroethyl 2,2,2-trifluoroethyl ether, 1,2-bis((difluorophosphanyl)oxy)ethane, 1,3,6-hexanetricarbonitrile, succinonitrile, 1-ethyl-3-methylimidazolium dicyanamide, trimethoxyboroxine, lithium bis(oxalato)borate, lithium difluoro(oxalato)borate, tris(trimethylsilyl) borate, lithium tetrafluoroborate, triisopropyl borate, lithium tetrafluoro(oxalato)phosphate, lithium difluoro(bisoxalato)phosphate, lithium difluorophosphate, diethyl (difluoromethyl) phosphonate, tris(trimethylsilyl) phosphite, tripropargyl phosphate, 2,4,8,10-tetraoxa-3,9-dithiaspiro[5.5]undecane 3,3,9,9-tetraoxide, dimethyl sulfate, ethylene dimethanesulfonate, methylene methyl disulfonate, lithium bis(fluorosulfonyl)imide, 3-fluoro-1,3-propanesultone, 1,3-propylene sulfate, 1,4-butane sultone, sulfolene, biphenyl, cyclohexyl benzene, 4-fluorotoluene, triphenyl phosphate, fluorobenzene, and 2-fluoro-biphenyl.

Among the above-described types, metal phosphate-based compounds, as a specific example, one or more selected from the group consisting of lithium difluoro(bisoxalato)phosphate (LiDFOP), lithium tetrafluorooxalatophosphate (LiTFOP), and lithium trioxalatophosphate are added to improve performance of a lithium secondary battery, a lithium ion capacitor, and the like, suppress side reactions inside a battery, and improve resistance and lifespan, and may be included in the electrolyte solution in an amount of, for example, 0.3 to 2.5 % by weight, preferably 0.5 to 1.5 % by weight. When the content of the above-described electrolyte solution additives satisfies the range, the high-temperature characteristics and cycle characteristics of a battery may be improved.

For example, the electrolyte solution additives may be included in the above-described electrolyte solution such that a total content of all components used is 10 % by weight or less, 0.2 to 8 % by weight, 0.2 to 5 % by weight, 0.2 to 3.5 % by weight, 0.2 to 3.0 % by weight, or 0.2 to 2.7 % by weight. When the content of the electrolyte solution additives satisfies the range, the high-temperature characteristics and cycle characteristics of a battery may be improved.

In addition, the present invention provides an electrolyte solution including the electrolyte solution additives of the present invention. The electrolyte solution is an electrolyte solution of a non-aqueous lithium secondary battery, and includes the electrolyte solution additives, an organic solvent, and a lithium salt.

For example, the organic solvent may be a carbonate-based organic solvent, and specifically, may be an organic solvent including one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

For example, the organic solvent may be a single solvent or a mixed solvent prepared by mixing two or more solvents. Preferably, a mixed solvent prepared by mixing an organic solvent having a high dielectric constant and high ionic conductivity used to increase the charge/discharge performance of a battery and a low-viscosity organic solvent capable of adjusting the viscosity of a solvent to be suitable for application to the battery may be used.

For example, the organic solvent having a high dielectric constant may include EC and PC, the low-viscosity organic solvent may include EMC, DMC, and DEC, and the organic solvent having a high dielectric constant and the low-viscosity organic solvent is preferably mixed in a volume ratio of 2:8 to 8:2. More specifically, a ternary mixed solvent of EC or PC, EMC, and DEC may be used, and the ratio of EC or PC and EMC and DEC may be 1 : 0.1 to 1 : 2 to 5, 1 : 0.2 to 0.5 : 3 to 5, or 1 : 0.2 to 0.3 : 3 to 4.

When the organic solvent contains moisture, lithium ions in the electrolyte may be hydrolyzed. Accordingly, the amount of moisture in the organic solvent is preferably adjusted to 150 ppm or less, preferably 100 ppm or less.

A compound capable of providing lithium ions used in a lithium secondary battery may be used as the lithium salt without particular limitation. Specifically, the lithium salt may include one or more selected from the group consisting of LiPF₆, LiF₄, LiCl, LiBr, LiI, LiClO₄, LiBF4, LiB₁₀Cl₁₀, LiSbF6, LiAsF₆, LiN(SO₂F)₂, LiN(SO₂CF₃)₂, LiN(SO₂C₂F₅)₂, LiCF₃SO₃, LiCF₃CO₂, Li(CF₃SO₂)₂N, LiN(SO₃C₂F₅)₂, Li(FSO₂)₂N, LiC₄F₉SO₃, LiClO₄, LiAlO₂, LiAlCl₄, LiN(CₓF₂ₓ+1SO₂)(C_{y}F_{2y}+1SO₂) (Here, x and y are natural numbers, e.g., integers from 1 to 20), LiAsF₆, LiSbF₆, LiAlCl₄, LiB(C₂O₄)₂ (lithium bis(oxalato) borate: LiBOB), CH₃SO₃Li, and CF₃SO₃Li.

When the lithium salt is dissolved in the electrolyte solution, the lithium salt functions as a source of lithium ions in a lithium secondary battery and may promote the movement of lithium ions between a cathode and an anode. Accordingly, the lithium salt is preferably included in a concentration of about 0.6 mol% to 3 mol% in the electrolyte solution. When the concentration of the lithium salt is less than 0.6 mol%, the conductivity of the electrolyte may be reduced, resulting in poor electrolyte performance. When the concentration of the lithium salt exceeds 3 mol%, the viscosity of the electrolyte may increase, which reduces the mobility of lithium ions. Considering the conductivity of the electrolyte and the mobility of lithium ions as described above, the lithium salt may be included in the electrolyte solution in an amount of preferably 0.7 mol% to 3 mol%, more preferably 0.8 mol% to 3 mol%.

For example, the electrolyte solution additives may be included in the electrolyte solution in an amount of 0.1 to 10 % by weight, 0.1 to 8.0 % by weight, 0.1 to 7 % by weight, 0.3 to 7 % by weight, 0.5 to 6 % by weight, or 0.5 to 5 % by weight. When the content of the above-described electrolyte solution additives satisfies the range, the high-temperature characteristics and cycle characteristics of a battery may be improved.

The secondary battery of the present invention includes an anode, a cathode, a separator interposed between the anode and the cathode, and the electrolyte solution.

For example, the cathode may be prepared by obtaining a composition for forming a cathode active material layer by mixing a cathode active material, a binder, and optionally a conductive agent, and then applying the composition to a cathode current collector such as aluminum foil.

A compound (lithiated intercalation compound) capable of reversible intercalation and deintercalation of lithium may be used as the cathode active material.

For example, a conventional NCM (lithium nickel manganese cobalt oxide, LiNiMnCoO₂) cathode active material used in a lithium secondary battery may be used as the cathode active material, and specifically, the cathode active material may be a lithium composite metal oxide in the form of Chemical Formula Li[NiₓCo_{y}Mn_{z}]O₂ (where 0 < x < 95, 0 < y < 35, 0 < z < 35, provided that x+y+z=100), without being limited thereto. For example, a conventional LFP (lithium iron phosphate compound, LiFe₂O₄), NCA, lithium-manganese-rich (LMR, LMX, OLO, HLM), or lithium-rich (DRX) cathode active material may also be used.

For example, variables x, y, and z of Chemical Formula Li[NixCoyMnz]O₂ may satisfy 0.0001<x<95, 0.0001<y<35, and 0.0001<z<35, preferably 1≤x≤93, 1≤y≤30, and 1≤z≤30, more preferably 5≤x≤91, 3≤y≤25, and 3≤z≤25. Here, x+y+z satisfies 100.

As another example, the lithium composite metal oxide may include one or more selected from the group consisting of LiCoO₂, LiMnO₂, LiMn₂O₄, LiNiO₂, LiNiₓMn₍₁₋ₓ₎O₂ (0<x<1), and LiM1ₓM2_{y}O₂ (0≤x≤1, 0≤y≤1, 0≤x+y≤1, M1 and M2 are each independently one selected from the group consisting of Al, Sr, Mg, and La). In this case, the capacity characteristics and stability of a battery may be increased.

A compound having a coating layer formed on the surface thereof may be used, or the compound and the compound having a coating layer may be mixed and used. The coating layer may include at least one coating element compound selected from the group consisting of an oxide of a coating element, a hydroxide of a coating element, an oxyhydroxide of a coating element, an oxycarbonate of a coating element, and a hydroxycarbonate of a coating element. The compounds forming these coating layers may be amorphous or crystalline.

The coating elements included in the coating layer may include Mg, Al, Co, K, Na, Ca, Si, Ti, V, Sn, Ge, Ga, B, As, Zr, or a mixture thereof. As a coating layer forming process, the compound may be coated by a method (e.g., spray coating, dipping method, etc.) that does not adversely affect the properties of the cathode active material by using these elements. Any coating method may be used, and since the above coating methods are known in the art, a detailed description thereof is omitted.

For example, based on a total weight of the cathode active material, the content of the cathode active material may be 90 % by weight or more or 90 to 98 % by weight.

In one embodiment of the present invention, the cathode active material layer may include a binder and a conductive material. In this case, based on a total weight of the cathode active material, the content of each of the binder and conductive material may be 1 % by weight or more or 1 to 5 % by weight.

The binder plays a role in attaching the cathode active material particles to each other. In addition, the binder plays a role in attaching the cathode active material to the current collector. For example, as the binder, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like may be used.

The conductive material is used to provide conductivity to the electrode, and any material that does not cause chemical changes and is electronically conductive may be used in the battery being constructed. For example, a conductive material including a carbon-based material such as natural graphite, artificial graphite, carbon black, acetylene black, Ketjen black, and carbon fiber; a metal-based material such as metal powder such as copper, nickel, aluminum, and silver or metal fiber; a conductive polymer such as a polyphenylene derivative; or a mixture thereof may be used.

Al may be used as a current collector, but the present invention is not limited thereto.

For example, the anode may be prepared by obtaining a composition for forming an anode active material layer by mixing an anode active material, a binder, and optionally a conductive agent, and then applying the composition to an anode current collector such as copper foil.

The surface of the anode may further include a solid electrolyte interface (SEI) film.

The anode active material may include a material capable of reversible intercalation and deintercalation of lithium ions, lithium metal, an alloy of lithium metal, a material capable of doping and de-doping lithium, or a transition metal oxide.

Any carbon-based anode active material that is commonly used in lithium-ion secondary batteries may be used as a material that may reversibly intercalate/de-intercalate lithium ions.

As a specific example, the anode active material may include carbonaceous materials such as artificial graphite, natural graphite, graphitized carbon fiber, and amorphous carbon. In addition to the carbonaceous materials, a metallic compound capable of alloying with lithium or a composite including a metallic compound and a carbonaceous material may also be used as the anode active material. For example, graphite may be used as the anode active material.

In addition, a metallic lithium thin film may be used as the anode active material. As the anode active material, at least one selected from the group consisting of crystalline carbon, amorphous carbon, carbon composites, lithium metal, and lithium-containing alloys, known to have high stability, may be used.

For example, as the metal capable of alloying with lithium, any one of Si, Al, Sn, Pb, Zn, Bi, In, Mg, Ga, Cd, Si alloy, Sn alloy, and Al alloy may be used.

The material capable of doping and de-doping lithium may include Si, Si-C composites, SiOₓ(0 < x < 2), Si-Q alloys (Q is an element selected from the group consisting of alkali metals, alkaline earth metals, group 13 elements, group 14 elements, group 15 elements, group 16 elements, transition metals, rare earth elements, and combinations thereof, but not Si.), Sn, SnO₂, Sn-R (R is an element selected from the group consisting of alkali metals, alkaline earth metals, group 13 elements, group 14 elements, group 15 elements, group 16 elements, transition metals, rare earth elements, and combinations thereof, but not Sn), and the like. In addition, a mixture of at least one of these and SiO₂ may also be used.

As the elements Q and R, one selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof may be used.

The transition metal oxides may include vanadium oxide, lithium vanadium oxide, or lithium titanium oxide.

In the anode active material layer, based on a total weight of the anode active material layer, the content of the anode active material may be, for example, 95 % by weight or more or 95 to 99 % by weight.

In the anode active material layer, based on a total weight of the anode active material layer, the content of the binder may be, for example, 1 % by weight or more or 1 to 5 % by weight.

When the conductive material is included, the anode active material may be used in an amount of 90 to 98 % by weight, the binder may be used in an amount of 1 to 5 % by weight, and the conductive material may be used in an amount of 1 to 5 % by weight.

The binder serves to attach anode active material particles to each other. In addition, the binder serves to attach the anode active material to the current collector. The binder may be a water-insoluble binder, a water-soluble binder, or a combination thereof.

The water-insoluble binder may include polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, polyamide-imide, polyimide, or a combination thereof.

The water-soluble binder may include a rubber-based binder or a polymer resin binder.

The rubber-based binder may be selected from styrene-butadiene rubber, acrylated styrene-butadiene rubber (SBR), acrylonitrile-butadiene rubber, acrylic rubber, butyl rubber, fluororubber, and a combination thereof.

The polymer resin binder may be selected from polytetrafluoroethylene, polyethylene, polypropylene, an ethylene propylene copolymer, polyethylene oxide, polyvinyl pyrrolidone, polyepichlorohydrin, polyphosphazene, polyacrylonitrile, polystyrene, an ethylene propylene diene copolymer, polyvinyl pyridine, chlorosulfonated polyethylene, latex, polyester resin, acrylic resin, phenol resin, epoxy resin, polyvinyl alcohol, and a combination thereof.

When the water-soluble binder is used as the anode binder, a cellulose-based compound capable of imparting viscosity may be further included.

For example, as the cellulose-based compound, carboxymethyl cellulose, hydroxypropyl methyl cellulose, methyl cellulose, or a mixture of alkali metal salts thereof may be used.

Na, K, or Li may be used as the alkali metal. For example, based on 100 parts by weight of the anode active material, the content of the thickener may be 0.1 to 5 parts by weight or 0.1 to 3 parts by weight.

The conductive material is used to provide conductivity to the electrode, and any material that does not cause chemical changes and is electronically conductive may be used in the battery being constructed. For example, a conductive material including a carbon-based material such as natural graphite, artificial graphite, carbon black, acetylene black, Ketjen black, and carbon fiber; a metal-based material such as metal powder such as copper, nickel, aluminum, and silver or metal fiber; a conductive polymer such as a polyphenylene derivative; or a mixture thereof may be used.

The current collector may be selected from the group consisting of copper foil, nickel foil, stainless steel foil, titanium foil, nickel foam, copper foam, a polymer substrate coated with a conductive metal, and a combination thereof.

Depending on the type of lithium secondary battery, a separator may be disposed between the cathode and anode. As the separator, polyethylene, polypropylene, polyvinylidene fluoride, or a multilayer film of two or more layers thereof may be used. In addition, mixed multilayer films such as a two-layer separator of polyethylene/polypropylene, a three-layer separator of polyethylene/polypropylene/polyethylene, and a three-layer separator of polypropylene/polyethylene/polypropylene may be used.

In the secondary battery of the present invention, by adding the above-described electrolyte solution additives in combination with conventional compounds added to an electrolyte solution to improve conventional battery performance, an effect of improving battery characteristics, such as battery charge resistance and output characteristics measured by an HPPC (Hybrid Pulse Power Characterization) method, and capacity recovery characteristics and lifespan characteristics even after long-term storage for 60 days or more at a high temperature of 60 °C or higher, may be further improved compared to when only conventional electrolyte solution additives are added.

Specifically, in the secondary battery of the present invention, an initial DC-IR discharge may be an HPPC discharge resistance value, for example, may be 75 mΩ or less, preferably 70 mΩ or less, more preferably 69 mΩ or less, and an increase rate of a resistance value measured after storage at 60 °C for 60 days relative to an initial resistance does not exceed 15%.

In the present disclosure, the HPPC discharge(charge) resistance value may be measured by the method prescribed in the literature "Battery test manual for plug-in hybrid electric vehicles (2010, Idaho National Laboratory for the U.S. Department of Energy)", and is an important index representing the output characteristics of a battery. In addition, the charge(discharge) resistance is a resistance value measured during charging(discharging) of a battery. As the charge(discharge) resistance decreases, energy loss is reduced, thereby increasing a charging speed, and improving the output of a battery. The secondary battery of the present invention has a low HPPC discharge resistance value, and has a high charging speed and excellent output. Due to these advantages, for example, the secondary battery of the present invention is suitable for use as an automobile battery.

The secondary battery may have a recovery capacity maintenance rate of 85 % or more, preferably 88 % or more as measured after storage for 60 days at 60 °C.

In the present disclosure, the recovery capacity represents the capacity retention characteristics of a battery that has been left unattended for a long period of time. The recovery capacity may be obtained by measuring and comparing discharged electric capacity when a battery left for a long time is discharged to a discharge final voltage and discharged electric capacity when the discharged battery is recharged and discharged again to the discharge final voltage. As the recovery capacity increases, the amount of natural discharge due to battery preservation (storage) decreases, which means that a battery may be preserved for a long time. In particular, as the storage temperature of a battery increases, spontaneous discharge rate increases. Thus, recovery capacity at high temperatures is a very important characteristic of automotive batteries. When the electrolyte additive of the present invention is added to an electrolyte for batteries, the recovery capacity is increased up to 11 %, as a specific example, 2 to 11 %, compared to a case of using only a conventional additive, and thus long-term storage is possible with only one charge.

In the secondary battery of the present invention, a lifespan retention efficiency measured after storage at 60 °C for 60 days may be 80% or more, preferably 85% or more, more preferably 88% or more.

Therefore, when the battery of the present invention is used as a battery for automobiles, output dependent on the size of an automobile may be improved. In addition, performance at low and high temperatures associated with climate change and direct exposure to sunlight while driving or parked may be improved. In addition, safety may be secured even when a high-content nickel cathode material for exhibiting high capacity is applied, so that the battery may exhibit excellent performance as an automotive battery.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### <Examples>

### Examples 1 to 8 and Comparative Examples 1 to 5

Electrolyte solutions for a battery were respectively prepared by using a carbonate-based mixed solvent having a volume ratio of EC:EMC:DMC = 20:5:75 as an organic solvent, and using the types and contents of the electrolyte solution additives shown in Table 1 below in a solution including LiPF₆ at a concentration of 1.15 M as a lithium salt.

For example, Example 1 corresponds to an experiment in which an electrolyte solution for a battery was prepared by adding 0.5 % by weight of a compound represented by Chemical Formula 1a and 0.5 % by weight of ethylene sulfate (ESA), and Example 2 corresponds to an experiment in which an electrolyte solution for a battery was prepared by adding 0.5 % by weight of the compound represented by Chemical Formula 1a and 0.5 % by weight of 1-propene-1,3-sultone (PRS).

Batteries were manufactured according to a battery manufacturing method described below using the electrolyte solution respectively obtained in Examples 1 to 8 and Comparative Examples 1 to 5, and then performance evaluation was performed, and the results are shown together in Table 1 below.

### Manufacture of battery

92 % by weight of Li(Ni_{0.8}Co_{0.1}Mn_{0.1})O₂ as a cathode active material, 4 % by weight of carbon black as a conductive agent, and 4 % by weight of polyvinylidene fluoride (PVdF) as a binder were added to N-methyl-2-pyrrolidone (NMP) as a solvent to prepare cathode mixture slurry. The cathode mixture slurry was applied to an aluminum (Al) thin film having a thickness of about 20 µm as a cathode current collector. Then, the thin film was dried, and then subjected to roll press to manufacture a cathode.

96 % by weight of carbon powder as an anode active material, 3 % by weight of PVdF as a binder, and 1 % by weight of carbon black as a conductive agent were added to NMP as a solvent to prepare anode mixture slurry. The anode mixture slurry was applied to a copper (Cu) thin film having a thickness of 10 µm as an anode current collector. Then, the thin film was dried, and then subjected to roll press to manufacture an anode.

A pouch-type battery was manufactured according to a conventional method using the manufactured cathode and anode and a separation membrane composed of three layers of polypropylene/polyethylene/polypropylene (PP/PE/PP). Then, the electrolyte solutions prepared in Examples 1 to 8 and Comparative Examples 1 to 5 were injected into the pouch-type battery to manufacture lithium secondary batteries.

### Performance evaluation

### [Evaluation of HPPC discharge(charge) resistance]

HPPC discharge(charge) resistance was measured according to the method prescribed in the literature "Battery test manual for plug-in hybrid electric vehicles," (2010, Idaho National Laboratory for the U.S. Department of Energy.).

After storing at 60 °C for 60 days, a measurement voltage value, a charge/discharge current value corresponding to C-rate, current change (ΔI), discharge voltage change (ΔV), charge voltage change (ΔV), charge resistance, and discharge resistance were measured. A resistance increase rate was calculated using a slope value obtained from change in current and voltage by briefly flowing charge/discharge current for each C-rate for a certain period of time.

### [Evaluation of high-temperature recovery capacity]

According to the charging conditions, charging was performed at a constant current of 0.5 C and a voltage of 4.2 V until charging current became 1/10 C. According to the discharging conditions, after performing charging and discharging by discharging to 3.0 V at a constant current of 0.5 C, discharge capacity was measured.

After charging was performed under the same charging and discharging conditions, the battery was stored at 60 °C for 60 days, and then discharged to a discharge voltage of 3 V under the same condition. Then, the remaining capacity was measured. Table 1 below shows the high-temperature recovery capacity.

### [Evaluation of high-temperature lifespan]

The secondary battery was charged with constant current at 60 °C at a current of 1 C rate until voltage reached 4.20 V (vs. Li), and then cut off at a current of 0.1 C rate while maintaining 4.20 V in a constant voltage mode. Subsequently, discharge was performed at a constant current of 1 C rate until voltage reached 3.0 V (vs. Li) during discharge (1st cycle). After repeating the cycle 300 times and then storing for 60 days, changes in capacity and retention rate were measured, and are shown as high-temperature lifespan capacity efficiency in Table 1 below.

**[Table 1]**

| Classification | Types of additives | Additive content (wt%) | Initial discharge DC-IR (mΩ) | Discharge DC-IR increase rate (%) | High-temperature recovery capacity efficiency (%) | Lifespan efficiency (%) |
|---|---|---|---|---|---|---|
| Example 1 | Chemical Formula 1a+ESA | 0.5 +0.5 | 65.2 | 14.2 | 89.2 | 90.1 |
| Example 2 | Chemical Formula 1a+PRS | 0.5 +0.5 | 67.8 | 15.7 | 89.5 | 89.9 |
| Example 3 | Chemical Formula 1a+ESA+ PRS | 0.5 +0.3 + 0.2 | 65.1 | 13.8 | 88.3 | 88.7 |
| Example 4 | Chemical Formula 1a+ESA+ PRS | 0.5 +0.2 + 0.3 | 65.8 | 14 | 88.1 | 88.7 |
| Example 5 | Chemical Formula 1a+ESA+ PRS | 0.5 +0.45 + 0.25 | 65.9 | 13.1 | 88.5 | 88.8 |
| Example 6 | Chemical Formula 1a+ESA+ PRS | 0.5 +0.25 + 0.45 | 66.8 | 14 | 88.2 | 88.8 |
| Example 7 | Chemical Formula 1a+ESA +PRS | 0.35+ 0.5 +0.5 | 65.9 | 14.1 | 88.1 | 88.7 |
| Example 8 | Chemical Formula 1a+ESA + PRS | 0.75+ 0.5 +0.5 | 66.7 | 13.5 | 89.7 | 88.7 |
| Comparative Example 1 | - | - | 77.2 | 37 | 82.8 | 83.1 |
| Comparative Example 2 | Chemical Formula 1a | 0.5 | 62.7 | 9.1 | 88.8 | 89.4 |
| Comparative Example 3 | ESA | 0.5 | 77.8 | 16.5 | 86.7 | 87.5 |
| Comparative Example 4 | PRS | 0.5 | 79.1 | 23.2 | 87.9 | 88.5 |
| Comparative Example 5 | ESA +PRS | 0.5 +0.5 | 74.2 | 18.4 | 88.4 | 88.8 |

| | | | | | | |
|---|---|---|---|---|---|---|
| (In Table 1, ESA refers to ethylene sulfate, and PRS refers to 1-propene-1,3-sultone.) | | | | | | |

As shown in Table 1, in the case of Examples 1 to 8 using the electrolyte solution additives of the present invention, it was confirmed that resistance characteristics, high-temperature recovery capacity, and high-temperature lifespan capacity efficiency were improved compared to Comparative Example 1 not including both the electrolyte solution additives represented by Chemical Formula 1a and the types used in combination, and Comparative Examples 3 to 5 including the types to be used in combination with Chemical Formula 1a alone or in a mixture.

In particular, a remarkable difference was shown in high-temperature recovery capacity. For reference, the recovery capacity is related to the reversibility of Li ions, and it is known that when elution of a transition metal of a cathode and deposition of the eluted metal ions on a surface of an anode occurs, or when irreversible Li ions increase due to interfacial side reactions between the cathode and the anode, it leads to a decrease in capacity.

Furthermore, as a result of the evaluation including the compound represented by Chemical Formula 1a as the electrolyte solution additives of the present invention, it was confirmed that in Examples 1 to 8, high-temperature recovery capacity and high-temperature lifespan capacity efficiency were improved compared to Comparative Example 2 using the compound represented by Chemical Formula 1a alone without other additional components as the electrolyte solution additives of the present invention.

### Additional Comparative Examples 1 to 10

Electrolyte solutions for a battery were respectively prepared by using a carbonate-based mixed solvent having a volume ratio of EC:EMC:DMC = 20:5:75 as an organic solvent, and using the types and contents of the electrolyte solution additives shown in Table 2 below in a solution including LiPF₆ at a concentration of 1.15 M as a lithium salt.

Batteries were manufactured according to the above-described battery manufacturing method using the electrolyte solution respectively obtained in Additional Comparative Examples 1 to 10, and then performance evaluation was performed, and the results are shown together in Table 2 below.

**[Table 2]**

| Classification | Types of additives | Additive content (wt%) | Initial discharge DC-IR (mΩ) | Discharge DC-IR increase rate (%) | High-tempera ture recovery capacity efficiency (%) | Lifesp an efficiency (%) |
|---|---|---|---|---|---|---|
| Example 1 | Chemical Formula 1a+ESA | 0.5 +0.5 | 65.2 | 14.2 | 89.2 | 90.1 |
| Example 2 | Chemical Formula 1a+PRS | 0.5 +0.5 | 67.8 | 15.7 | 89.5 | 89.9 |
| Example 3 | Chemical Formula 1a+ESA +PRS | 0.5 +0.3 + 0.2 | 65.1 | 13.8 | 88.3 | 88.7 |
| Example 4 | Chemical Formula 1a+ESA +PRS | 0.5 +0.2 + 0.3 | 65.8 | 14 | 88.1 | 88.7 |
| Example 5 | Chemical Formula 1a+ESA +PRS | 0.5 +0.45 + 0.25 | 65.9 | 13.1 | 88.5 | 88.8 |
| Example 6 | Chemical Formula 1a+ESA +PRS | 0.5 +0.25 + 0.45 | 66.8 | 14 | 88.2 | 88.8 |
| Example 7 | Chemical Formula 1a+ESA +PRS | 0.35+0. 5 +0.5 | 65.9 | 14.1 | 88.1 | 88.7 |
| Example 8 | Chemical Formula 1a+ESA + PRS | 0.75+0. 5 +0.5 | 66.7 | 13.5 | 89.7 | 88.7 |
| Additional Comparative Example 1 | Chemical Formula 1a+ESA | 0.5 +0.1 | 64.3 | 15.6 | 88.6 | 88.7 |
| Additional Comparative Example 2 | Chemical Formula 1a+ESA | 0.5 +1.0 | 67.1 | 15.2 | 88.7 | 88.8 |
| Additiona l Comparati ve Example 3 | Chemic al Formul a 1a+PRS | 0.5 +0.1 | 66.9 | 16.2 | 89 | 89.6 |
| Additiona l Comparati ve Example 4 | Chemic al Formul a 1a+PRS | 0.5 +1.0 | 70.3 | 16.7 | 88.5 | 88.7 |
| Additiona l Comparati ve Example 5 | Chemic al Formul a 1a+ESA | 0.1+0.5 | 63.3 | 15.2 | 87.1 | 87.2 |
| Additional Comparative Example 6 | Chemical Formula 1a+ESA | 1+0.5 | 67.2 | 15 | 87.3 | 87.5 |
| Additional Comparative Example 7 | Chemical Formula 1a+PRS | 0.1+0.5 | 66.8 | 16 | 89.1 | 89.6 |
| Additional Comparative Example 8 | Chemical Formula 1a+PRS | 1+0.5 | 71 | 16.1 | 88.2 | 88.1 |
| Additional Comparative Example 9 | Chemical Formula 1a+ESA + PRS | 1.0+0.5 +0.5 | 67.3 | 14.8 | 89.1 | 88.6 |
| Additional Comparative | Chemical Formula | 0.1+0.5 +0.5 | 65.3 | 15.1 | 88 | 88.3 |
| Example 10 | 1a+ESA + PRS | | | | | |

| | | | | | | |
|---|---|---|---|---|---|---|
| (In Table 2, ESA refers to ethylene sulfate, and PRS refers to 1-propene-1,3-sultone.) | | | | | | |

As shown in Table 2, as a result of the evaluation including the compound represented by Chemical Formula 1a as the electrolyte solution additives of the present invention, it was confirmed that in Examples 1 to 8, at least one of DC-IR resistance characteristics after high-temperature storage, high-temperature recovery capacity characteristics, and high-temperature lifespan characteristics was remarkably improved compared to Additional Comparative Examples 1 to 10 using additives out of an appropriate range.

Furthermore, as a result of measuring a change in thickness of a battery before and after high-temperature storage, it could be confirmed that the electrolyte solution additives of the present invention significantly suppressed oxidation/reduction decomposition of the electrolyte solution, thereby also having an effect of reducing an amount of gas generated.

As a result, in the case of the secondary batteries of Examples 1 to 8 in which the electrolyte solution additives having a specific composition were appropriately used in combination with the conventional electrolyte solution additives, it could be seen that discharge efficiency was excellent in output and lifespan performance of a final completed composition compared to Comparative Example 1 not including any of the electrolyte solution additives, Comparative Example 2 including the electrolyte solution additives having a specific structure alone, or Comparative Examples 3 to 5 using only the conventional electrolyte solution additive(s), and furthermore, Additional Comparative Examples 1 to 10 which include these additives but are out of an appropriate content range.

Therefore, when applying the electrolyte solution additives according to embodiments of the present invention and the electrolyte solution including the same to a secondary battery, it can be seen that the secondary battery is suitable for use as a secondary battery for automobiles because the secondary battery not only provides an effect of reducing an amount of gas generated by suppressing side reactions inside the battery, but also improves charge resistance, discharge resistance, output, recovery capacity, and lifespan efficiency even when performing long-term storage at a high temperature.

## Claims

1. Electrolyte solution additives comprising a compound in which one S-X bond and two S=O bonds are directly connected to a sulfur (S) element; and one or more compounds selected from the group consisting of 1-propene-1,3-sultone and ethylene sulfate, wherein X is a halogen element.

2. The electrolyte solution additives according to claim 1, wherein the compound in which one S-X bond and two S=O bonds are directly connected to a sulfur (S) element has an asymmetric structure having a terminal -O-R3 (wherein R3 is an alkyl group having 1 to 3 carbon atoms).

3. The electrolyte solution additives according to claim 1, wherein the compound in which one S-X bond and two S=O bonds are directly connected to a sulfur (S) element is a compound represented by Chemical Formula 1 below in which one S-X bond and two S=O bonds are directly connected to a sulfur (S) element. 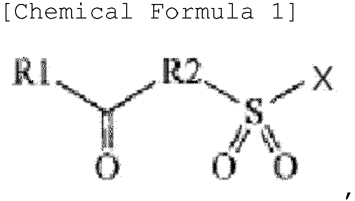 wherein a line represents a bond; when a separate element is not indicated, a point where bonds meet is carbon; a number of hydrogens satisfying a valence of the carbon is omitted; R1 is -O-R3; R2 is an alkylene having 1 to 3 carbon atoms; R3 is an alkyl having 1 to 3 carbon atoms; and X is F, Cl, I, or Br.

4. The electrolyte solution additives according to claim 1, wherein, based on 100 % by weight in total of the electrolyte solution, the compound in which one S-X bond and two S=O bonds are directly connected to a sulfur (S) element is comprised in an amount of 10 % by weight or less.

5. The electrolyte solution additives according to claim 1, wherein, based on 100 % by weight in total of the electrolyte solution, the one or more compounds selected from the group consisting of 1-propene-1,3-sultone and ethylene sulfate are comprised in a total amount of 10 % by weight or less.

6. The electrolyte solution additives according to claim 1, wherein the compound in which one S-X bond and two S=O bonds are directly connected to a sulfur (S) element; and the one or more compounds selected from the group consisting of 1-propene-1,3-sultone and ethylene sulfate are comprised in a weight ratio of 1:0.5 to 1:3.

7. An electrolyte solution comprising an organic solvent, lithium salt, and electrolyte solution additives, wherein the electrolyte solution additives comprise the electrolyte solution additives according to any one of claims 1 to 6.

8. The electrolyte solution according to claim 7, wherein the organic solvent comprises one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

9. The electrolyte solution according to claim 7, wherein the lithium salt comprises one or more selected from the group consisting of LiPF₆, LiF₄, LiCl, LiBr, LiI, LiClO₄, LiB ₁₀Cl ₁₀, LiCF₃SO₃, LiCF₃CO₂, LiAsF₆, LiSbF₆, LiAlCl₄, CH₃SO₃Li, CF₃SO₃Li, and (CF₃SO₂)₂Nli.

10. A secondary battery comprising an anode, a cathode, a separation membrane interposed between the anode and the cathode, and an electrolyte solution, wherein the electrolyte solution is the electrolyte solution according to claim 7.

11. The secondary battery according to claim 10, wherein the secondary battery is a battery for automobiles.
